# EUROPÄISCHE PATENTSCHRIFT

(11) **EP 3 670 265 B1**
(45) Veröffentlichungstag und Bekanntmachung des Hinweises auf die Patenterteilung: **21.07.2021**
(21) Anmeldenummer: 18214910.4
(22) Anmeldetag: 20.12.2018
(51) Int. Cl.: B60Q 3/30, B60Q 1/30, B60Q 3/82, B60Q 1/32

(54) **NUTZFAHRZEUGAUFBAU MIT BELEUCHTUNGSEINRICHTUNG ZUM BELEUCHTEN DES LADERAUMS**
COMMERCIAL VEHICLE COMPARTMENT WITH LIGHTING DEVICE FOR ILLUMINATING THE LOADING SPACE
COMPARTIMENT DE VÉHICULE COMMERCIAL POURVU D'UN DISPOSITIF D'ÉCLAIRAGE DESTINÉ À ÉCLAIRER L'ESPACE DE CHARGEMENT

(43) Veröffentlichungstag der Anmeldung: 24.06.2020
(73) Patentinhaber: Schmitz Cargobull AG, 48341 Altenberge (DE)
(72) Erfinder: Beelmann, Reinhard, 45721 Haltern am See (DE)
(74) Vertreter: Cohausz & Florack

(56) Entgegenhaltungen:
- EP-A1- 2 353 936
- WO-A1-2008/077843
- WO-A1-2018/156179
- US-A- 5 602 526
- US-A- 6 089 588
- US-A- 6 152 586

## Beschreibung

Die Erfindung betrifft einen Nutzfahrzeugaufbau, insbesondere Kofferaufbau, mit einer Stirnwand, mit einem durch die Stirnwand nach vorne begrenzten Laderaum, mit einer Beleuchtungseinrichtung zum Beleuchten des Laderaums, mit einer Schalteinrichtung zum Aktivieren und Deaktivieren der Beleuchtungseinrichtung und mit einer den aktivierten und den deaktivierten Zustand der Beleuchtungseinrichtung optisch und auf voneinander unterscheidbare Weise anzeigende Anzeigeeinrichtung.

Nutzfahrzeuge, beispielsweise in Form von Lastkraftwagen, Anhängern und Sattelaufliegern, sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Aufbauten auf, welche der Aufnahme der zu transportierenden Güter in einem Laderaum dienen. So sind beispielsweise Planenaufbauten bekannt, bei denen die Seitenwände und das Dach durch wenigstens eine Planeneinheit verschlossen sind. Die Stirnwand ist bei Planenaufbauten meist als feste Wand ausgebildet, während die Rückwand regelmäßig durch zwei Flügeltüren gebildet wird, um den Laderaum bedarfsweise von hinten zu beladen. Wenn eine Planeneinheit entlang der Seitenwand verschoben werden kann, spricht man auch von sogenannten Curtainsidern.

Neben den Planenaufbauten sind auch Kofferaufbauten mit festen Seitenwänden, einer festen Stirnwand und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport, geeignet. Die Rückwand der Kofferaufbauten wird meist durch zwei Flügeltüren oder ein Rolltor verschlossen.

Die Kofferaufbauten weisen regelmäßig an der Stirnwand, dem Dach und/oder den Seitenwänden Paneelelemente auf, die eine äußere und eine innere, strukturgebende Decklage sowie eine dazwischen vorgesehene Kernlage umfassen, die typischerweise aus einem geschäumten Kunststoff gebildet wird. Dabei können die innere und/oder die äußere Decklage selbst bedarfsweise mehrlagig aufgebaut sein.

Der Laderaum der beschriebenen Aufbauten ist während der Fahrt des entsprechenden Nutzfahrzeugs typischerweise verschlossen. Während des Be- oder Entladens des Laderaums ist es in vielen Fällen gewünscht, wenn der Laderaum beleuchtet werden kann, um das Be- und Entladen des Laderaums zu vereinfachen. Deshalb können die Nutzfahrzeugaufbauten eine Beleuchtungseinrichtung zum Beleuchten des Laderaums aufweisen. Dieser ist regelmäßig nach vorne bezogen auf den Nutzfahrzeugaufbau durch eine Stirnwand begrenzt. Die Stirnwand kann dabei je nach der Art des Aufbaus als feste Wand oder in einer anderen Weise ausgebildet sein. Um die Beleuchtungseinrichtung aktivieren, also einschalten, und wieder deaktivieren, also wieder ausschalten, zu können, ist bei dem entsprechenden Nutzfahrzeugaufbau eine Schalteinrichtung vorgesehen.

Die Schalteinrichtung oder die Beleuchtungseinrichtung selbst kann dann bedarfsweise mit einer Anzeigeeinrichtung gekoppelt sein, um den aktivierten und den deaktivierten Zustand der Beleuchtungseinrichtung optisch und auf voneinander unterscheidbare Weise anzuzeigen. Dies bedeutet beispielsweise, dass die Anzeigeeinrichtung auf eine bestimmte Weise anzeigt, dass die Beleuchtungseinrichtung eingeschaltet ist und den Laderaum beleuchtet, und auf eine andere Weise anzeigt, dass die Beleuchtungseinrichtung ausgeschaltet ist und den Laderaum nicht beleuchtet. Der entsprechende Zustand der Beleuchtungseinrichtung wird über die Anzeigeeinrichtung so angezeigt, dass beispielsweise der Fahrer anhand der Anzeigeeinrichtung ohne Weiteres feststellen kann, in welchem Zustand sich die Beleuchtungseinrichtung befindet, ohne dazu in den Laderaum schauen zu müssen. In einem einfachen Fall, kann die Anzeigeeinrichtung in die Schalteinrichtung integriert sein, etwa wenn die Schalteinrichtung einen Drehschalter umfasst, dessen Stellung über eine Markierung sehr einfach erkannt werden kann. Beispielsweise kann der Drehschalter einen Strich in einer Farbe aufweisen, die einen hohen Kontrast zu dem übrigen Schalter bildet, so dass leicht erkannt werden kann, in welcher Stellung sich der Schalter befindet, was wiederum ein klares Indiz dafür ist, in welchem Zustand sich die Beleuchtungseinrichtung befindet.

Es kommt aber dennoch in vielen Fällen vor, dass die Beleuchtungseinrichtung auch nach dem Be- oder Entladen eingeschaltet bleibt, etwa weil der Fahrer vergessen hat, die Beleuchtungseinrichtung wieder auszuschalten. Dies kann jedoch zu einem vorschnellen Entleeren der Batterie des Nutzfahrzeugaufbaus führen. In den Fällen, in denen sich eine lichtempfindliche Ladung im Laderaum befindet, kann es zudem zu einer Beeinträchtigung der Ladung kommen.

WO 2008/077843 A1 offenbart ein Nutzfahrzeugaufbau mit einer Beleuchtungseinrichtung zum Beleuchten des Laderaums und einer Schalteinrichtung zum Aktivieren und Deaktivieren der Beleuchtungseinrichtung.

Daher liegt der vorliegenden Erfindung die Aufgabe zugrunde, den eingangs genannten und zuvor näher beschriebenen Nutzfahrzeugaufbau derart auszugestalten und weiterzubilden, dass die Beleuchtungseinrichtung seltener unbeabsichtigt aktiviert bleibt, ohne hierfür einen unverhältnismäßigen apparativen Aufwand zu betreiben.

Diese Aufgabe ist bei einem Nutzfahrzeugaufbau nach dem Oberbegriff von Anspruch 1 dadurch gelöst, dass der Nutzfahrzeugaufbau eine den aktivierten und den deaktivierten Zustand der Beleuchtungseinrichtung optisch und auf voneinander unterscheidbare Weise anzeigende Anzeigeeinrichtung aufweist, und dass die Anzeigeeinrichtung an der Vorderseite der Stirnwand bezogen auf den Nutzfahrzeugaufbau angeordnet und höchstens 45 cm, vorzugsweise höchstens 30 **cm**, insbesondere höchstens 25 **cm**, von einem seitlichen Rand der Stirnwand beabstandet ist.

Die Erfindung hat erkannt, dass allein durch eine zweckmäßige Anordnung der Anzeigevorrichtung auf der Stirnwand die Wahrscheinlichkeit verringert werden kann, dass der Fahrer oder eine andere Person vergisst, die Beleuchtungseinrichtung zu deaktivieren, wenn diese nicht mehr benötigt wird. Der Fahrer kann nämlich durch die erfindungsgemäße, randnahe Anordnung der Anzeigeeinrichtung bezogen auf die Stirnwand im Rückspiegel erkennen, ob die Beleuchtungseinrichtung deaktiviert worden ist oder nicht. Entweder der Fahrer kontrolliert den Zustand der Beleuchtungseinrichtung oder der Anzeigeeinrichtung, bevor der Fahrer nach dem Be- oder Entladen losfährt, oder der Fahrer erkennt während der Fahrt bei einem Blick in den Rückspiegel, dass die Beleuchtungseinrichtung vor Antritt der Fahrt nicht deaktiviert worden ist. Der Fahrer kann dann anhalten und die Beleuchtungseinrichtung nachträglich deaktivieren.

Bei einer ersten besonders bevorzugten Ausgestaltung des Nutzfahrzeugaufbaus weist die Anzeigeeinrichtung wenigstens ein Leuchtmittel zum Anzeigen des aktivierten und/oder des deaktivierten Zustands der Beleuchtungseinrichtung auf. Dadurch sind die Anzeigeeinrichtung und der Zustand der Beleuchtungseinrichtung sehr zuverlässig zu erfassen, und zwar auch bei schlechten Lichtverhältnissen. Dabei bietet es sich insbesondere an, wenn das wenigstens eine Leuchtmittel zum Abstrahlen von Licht wenigstens im Wesentlichen nach vorne bezogen auf den Nutzfahrzeugaufbau vorgesehen ist. So kann der Fahrer den Zustand der Beleuchtungseinrichtung anhand der Anzeigeeinrichtung umso einfacher erkennen. Dies gilt umso mehr bei einem Blick in den Rückspiegel, der dem Verkehr und eigentlich nicht unbedingt der Anzeigeeinrichtung gilt. Dem Fahrer fällt dann dennoch sehr wahrscheinlich auf, dass die Anzeigeeinrichtung eine noch aktivierte Beleuchtungseinrichtung anzeigt. Um Bauraum zu sparen und um eine leichte Erkennbarkeit der Anzeige durch die Anzeige auch bei schlechten Sichtverhältnissen zu gewährleisten, bietet es sich an, wenn das wenigstens eine Leuchtmittel der Anzeigeeinrichtung als ein LED-Leuchtmittel ausgebildet ist.

Die Erkennbarkeit der Anzeige der Anzeigeeinrichtung kann auch dadurch verbessert werden, dass die Anzeigeeinrichtung in einem Abstand von höchstens 100 cm, vorzugsweise höchstens 70 cm, insbesondere höchstens 40 cm, vom unteren Rand der Stirnwand beabstandet ist. Auf diese Weise ist die Anzeigeeinrichtung häufig im Blickwinkel des Fahrers, wenn dieser in den Rückspiegel schaut. Zudem setzt sich die Anzeigeeinrichtung in einer solchen Position besser von anderen Lichtquellen in der Umgebung des Nutzfahrzeugs ab, was die Erkennbarkeit der Anzeige weiter steigert.

Unabhängig davon kann die Bedienbarkeit der Beleuchtungseinrichtung verbessert werden, wenn die Schalteinrichtung an der Vorderseite der Stirnwand abgeordnet ist. Die Vorderseite ist dabei die Seite, die bezogen auf den Nutzfahrzeugaufbau nach vorne weist. Dann ist die Schalteinrichtung für den Fahrer auch leicht zugänglich, so dass der Fahrer die Beleuchtungseinrichtung nicht aus Bequemlichkeit aktiviert lässt, bevor der Fahrer losfährt. Die Bedienbarkeit der Beleuchtungseinrichtung kann dabei insbesondere dann verbessert werden, wenn die Schalteinrichtung in einem Abstand von höchstens 45cm, vorzugsweise höchstens 30 cm, insbesondere höchstens 25 cm, von einem seitlichen Rand der Stirnwand und/oder die Schalteinrichtung in einem Abstand von höchstens 100 cm, vorzugsweise höchstens 70 cm, insbesondere höchstens 40 cm, vom unteren Rand der Stirnwand beabstandet ist. In solchen Fällen wird eine sehr gute Zugänglichkeit der Schalteinrichtung erreicht.

Um die Fertigungskosten und den apparativen Aufwand zu verringern, bietet es sich an, wenn die Schaltvorrichtung und die Anzeigeeinrichtung wenigstens teilweise, insbesondere wenigstens teilweise wenigstens im Wesentlichen vollständig, in einem gemeinsamen Gehäuse verbaut sind. So kann auch eine gemeinsame Spannungsversorgung realisiert werden, was die Verkabelung des Nutzfahrzeugs vereinfacht. Dabei kann erreicht werden, dass das Gehäuse bis auf höchstens das Bedienpaneel und die Durchführungen für elektrische Leitungen geschlossen ausgebildet ist. Auf diese Weise lässt sich ein sehr guter Schutz gegenüber einer potentiellen Gefährdung, etwa durch eindringende Feuchtigkeit erreichen. Eine Schutzart bis zu einer Klasse von bis zu IP69K ist denkbar.

Einfach und kostengünstig ist es dabei, wenn das Gehäuse wenigstens im Wesentlichen aus Kunststoff gebildet ist. Dies eröffnet auch die Möglichkeit, die Form des Gehäuses einfach an die Einbausituation und den Platzbedarf anzupassen. Weiter bevorzugt ist es dabei grundsätzlich, wenn das Bedienpaneel bündig in die Vorderseite der Stirnwand integriert ist. So wird dieses recht gut gegenüber einer versehentlichen Beschädigung geschützt.

Um Bauraum zu sparen und eine noch weitere Integration zu erreichen, kann das wenigstens eine Leuchtmittel der Anzeigeeinrichtung ein Leuchtmittel wenigstens eines Schalters oder Tasters, insbesondere Sensortasters, der Schaltvorrichtung sein. Der Schalter bzw. Taster und das Leuchtmittel der Anzeigeeinrichtung müssen also nicht separat vorgesehen werden. Vielmehr kann die Funktion der Anzeige in den Schalter bzw. den Taster integriert werden, was zu einer weiteren Vereinfachung des Systems insgesamt führt. Wenn der Schalter oder der Taster betätigt wird, wird beispielsweise automatisch bzw. zwangsweise das wenigstens eine Leuchtmittel der Beleuchtungseinrichtung aktiviert, so dass es Licht abstrahlt, oder deaktiviert, so dass das wenigstens eine Leuchtmittel der Beleuchtungseinrichtung kein Licht abstrahlt. Alternativ kann auch durch das Betätigen des Schalters oder Tasters eine Änderung der Farbe des Lichts vorgenommen werden, so dass anhand der Farbe des von der Anzeigeeinrichtung abgestrahlten Lichts erkannt werden kann, in welchem Zustand sich die Beleuchtungseinrichtung befindet. Ganz unabhängig davon kann es sich im Falle eines Tasters bevorzugt um einen Sensortaster handeln. Diese Taster erfüllen grundsätzlich höchste Schutz-Standards, etwa weil ein Eindringen von Feuchtigkeit verhindert werden kann. Besonders komfortabel und zuverlässig ist es dabei, wenn der Sensortaster ein berührungsloser Sensortaster ist. Bei Sensortastern besteht die Reaktion auf Druck oder Annäherung mit dem Finger in der Änderung elektrischer oder nichtelektrischer Parameter. Die unterschiedlichen Sensortaster, die auf unterschiedlichen physikalischen Prinzipien beruhen, sind als solche aus anderen Anwendungen bekannt. Dabei weisen entsprechende Sensortaster, seien sie berührungslos oder nicht, auch dann Vorteile auf, wenn das Leuchtmittel der Anzeigeeinrichtung nicht in den Sensortaster integriert ist, weil die Sensortaster auch dann eine sehr hohe Schutzart zum Schutz des Bedieners ermöglichen.

Wenn die Anzeigeeinrichtung bei aktivierter Beleuchtungseinrichtung ein Licht einer anderen Farbe als bei deaktivierter Beleuchtungseinrichtung und/oder umgekehrt abstrahlt, kann der Komfort für den Fahrer gesteigert werden. In dem Fall, dass der Fahrer keine Anzeige der Anzeigeeinrichtung erkennen kann, kann dies entweder daran liegen, dass die Anzeige ebenso wie die Beleuchtungseinrichtung ausgeschaltet ist. Es kann aber auch daran liegen, dass die Anzeigeeinrichtung schlicht nicht zu erkennen ist, und zwar beispielsweise über den Rückspiegel der Zugmaschine. Wenn jedoch die Anzeigeeinrichtung unabhängig von dem Status der Beleuchtungseinrichtung ein Licht einer bestimmten Farbe abstrahlt, dann ist für den Fahrer klar zu erkennen, ob er die Anzeige in seinem Blickfeld hat oder nicht. Auch wird der Fahrer so eine direkte Rückmeldung über eine mögliche Fehlfunktion erhalten.

Neben der Anzeigeeinrichtung kann es sich anbieten, dass wenigstens eine Positionsleuchte zur seitlichen Positionsbeleuchtung des Nutzfahrzeugaufbaus an der Stirnwand vorgesehen ist. Dies dient in erster Linie der Positionsmarkierung, kann aber auch mit der Anzeigeeinrichtung abgestimmt oder kombiniert sein. Die Sichtbarkeit der Anzeigeeinrichtung bzw. deren Anzeige sollte durch die Positionsleuchte nicht zu sehr beeinträchtigt werden. Dabei bietet es sich zur Verringerung des apparativen Aufwands an, wenn die Positionsleuchte mit der Schaltvorrichtung und/oder der Anzeigeeinrichtung wenigstens teilweise, insbesondere wenigstens teilweise wenigstens im Wesentlichen vollständig, in einem gemeinsamen Gehäuse angeordnet sind. So kann eine gemeinsame Spannungsversorgung realisiert werden, was die Verkabelung des Nutzfahrzeugs vereinfacht. Dabei kann erreicht werden, dass das Gehäuse ein bis auf höchstens das Bedienpaneel und die Durchführungen für elektrische Leitungen geschlossen ausgebildet ist. Auf diese Weise lässt sich ein sehr guter Schutz gegenüber einer potentiellen Gefährdung, etwa durch eindringende Feuchtigkeit erreichen. Insbesondere kann die erforderliche Elektronik sicher im dem gemeinsamen Gehäuse aufgenommen sein. Eine Schutzart bis zu einer Klasse von bis zu IP69K ist denkbar. Vor diesem Hintergrund ist es umso bevorzugter, wenn die Positionsleuchte mit der Schaltvorrichtung und der Anzeigeeinrichtung jeweils wenigstens teilweise in einem gemeinsamen Gehäuse angeordnet sind, weil dann eine umfassende Integration erreichbar ist. Zwingend erforderlich ist dies jedoch nicht.

Für eine gute Erkennbarkeit der Positionsleuchte und bedarfsweise der Anzeigeeinrichtung bietet es sich besonders an, wenn die wenigstens eine Positionsleuchte in einem Abstand von höchstens 45cm, vorzugsweise höchstens 30 cm, insbesondere höchstens 25 cm, von einem seitlichen Rand der Stirnwand beabstandet angeordnet ist und/oder dass die wenigstens eine Positionsleuchte höchstens 100 cm, vorzugsweise höchstens 70 cm, insbesondere höchstens 40 cm, von der Unterkante der Stirnwand beabstandet ist. Hier sind bedarfsweise auch genehmigungsrechtliche oder zulassungsrechtliche Vorgaben zu erfüllen. Für die Zulassung im bundesdeutschen Straßenverkehr sind beispielsweise die Vorgaben der Straßenverkehrsordnung (StVO) einzuhalten.

Um Platz zu sparen, um eine gute Sichtbarkeit und gleichzeitig Unterscheidbarkeit von Anzeigeeinrichtung und Positionsleuchte zu gewährleisten und um die Integration zu begünstigen, kann es sich anbieten, wenn das wenigstens eine Leuchtmittel der Positionsleuchte ein LED-Leuchtmittel ist. Die LED-Leuchtmittel können sehr klein und dennoch gut sichtbar verbaut werden.

Die Erfindung wird nachfolgend anhand einer lediglich Ausführungsbeispiele darstellenden Zeichnung näher erläutert. In der Zeichnung zeigt
- Fig. 1: ein Nutzfahrzeug mit einem ersten erfindungsgemäßen Nutzfahrzeugaufbau in einer perspektivischen Ansicht,
- Fig. 2: das Nutzfahrzeug aus Fig. 1 in einer Ansicht von vorne auf die Stirnwand,
- Fig. 3: einen zweiten erfindungsgemäßen Nutzfahrzeugaufbau in einer Ansicht von vorne auf die Stirnwand und
- Fig. 4: ein gemeinsames Gehäuse von Anzeigeeinrichtung, Schalteinrichtung und Positionsleuchte des Nutzfahrzeugs aus Fig. 3 in einer perspektivischen Ansicht.

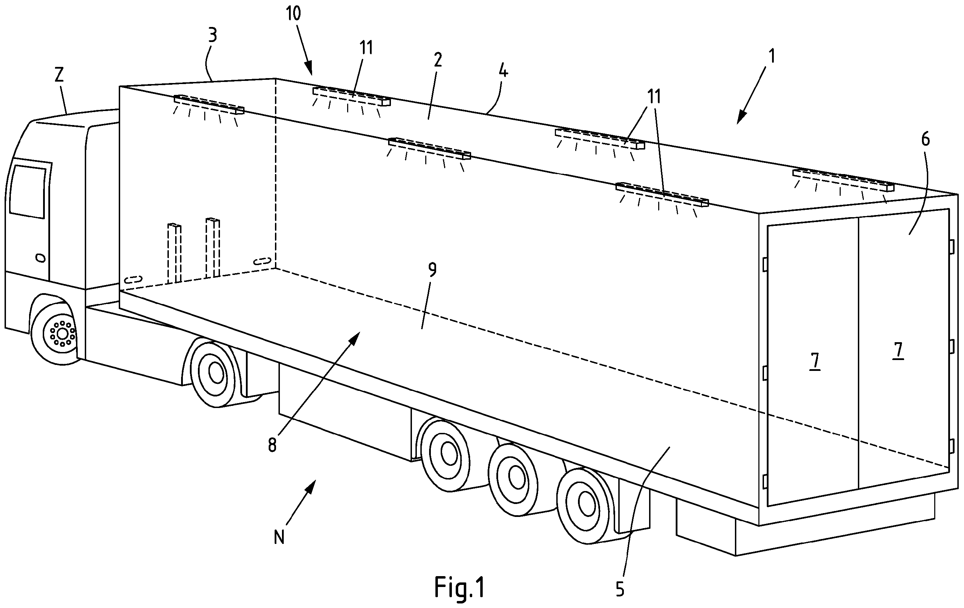

In der Fig. 1 ist ein Nutzfahrzeug N in Form eines Sattelaufliegers mit einem Nutzfahrzeugaufbau 1 in Form eines Kofferaufbaus in einer perspektivischen Ansicht dargestellt, das von einer Zugmaschine Z gezogen wird. Der Nutzfahrzeugaufbau 1 umfasst ein festes Dach 2, eine feste Stirnwand 3, zwei feste Seitenwände 4,5 und eine feste Rückwand 6, die im Wesentlichen durch zwei Flügeltüren 7 gebildet wird. Zudem umfasst der Nutzfahrzeugaufbau 1 einen Laderaum 8, der nach unten durch einen Ladeboden 9 begrenzt wird, der dem Aufstellen von Ladung dient. Die Seitenwände 4,5, die Stirnwand 4, die Flügeltüren 7 und das Dach 3 werden wenigstens im Wesentlichen aus Paneelelementen gebildet. Zum Beleuchten des Laderaums 9, etwa während des Be- und/oder Entladens ist in dem Nutzfahrzeugaufbau 1 eine Beleuchtungseinrichtung 10 vorgesehen. Bei dem dargestellten und insoweit bevorzugten Nutzfahrzeugaufbau 1 weist die Beleuchtungseinrichtung 10 Leuchtmittel 11 im Dach 2 des Nutzfahrzeugaufbaus 1 auf. Die Leuchtmittel 11 könnten aber alternativ oder zusätzlich auch in wenigstens einer Seitenwand 4,5, der Stirnwand 3 oder der Rückwand 6 vorgesehen sein.

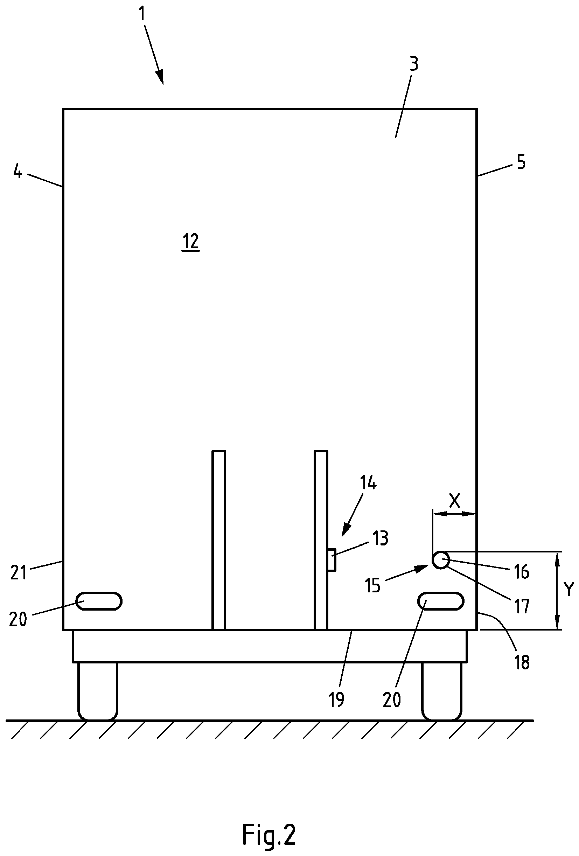

In der Fig.2 ist der Nutzfahrzeugaufbau 1 von vorne dargestellt. An der nach vorne weisenden Vorderseite 12 der Stirnwand 3 ist ein Schalter 13 einer Schalteinrichtung 14 vorgesehen. Über diesen Schalter 13 kann die Beleuchtungseinrichtung 10 aktiviert oder deaktiviert werden. Mit anderen Worten wird das wenigstens eine Leuchtmittel 11 der Beleuchtungseinrichtung 10 zum Beleuchten des Laderaums 8 mit Hilfe des Schalters 13 angeschaltet oder ausgeschaltet. Eine Schalteinrichtung 14 weist neben dem Schalter 13 wenigstens noch eine Verkabelung und, vorzugsweise, noch eine Elektronik auf, die vorliegend aber nicht dargestellt ist/sind.

Zudem ist an der Vorderseite 12 der Stirnwand 3 noch eine Anzeigeeinrichtung 15 vorgesehen. Die Anzeigeeinrichtung 15 zeigt dabei auf optische Weise an, ob sich die Beleuchtungseinrichtung 10 im aktivierten oder im deaktivierten Zustand befindet oder nicht. Man kann also mit bloßem Auge erkennen, ob die Beleuchtungseinrichtung 10 bzw. die Leuchtmittel 11 an- oder ausgeschaltet ist/sind. Bei einer einfachen Ausgestaltung leuchtet ein Leuchtmittel 16 der Anzeige 17 der Anzeigeeinrichtung 15, wenn die Beleuchtungseinrichtung 10 aktiviert ist. Wenn die Beleuchtungseinrichtung 10 deaktiviert ist, der Laderaum 8 also nicht beleuchtet wird, strahlt das Leuchtmittel 16 der Anzeigeeinrichtung 15 dagegen kein Licht ab.

Es könnte jedoch auch vorgesehen sein, dass das Leuchtmittel 16 der Anzeigeeinrichtung 15 ein Licht einer ersten Farbe, beispielsweise rot, abstrahlt, wenn die Beleuchtungseinrichtung 10 aktiviert ist, und ein Licht einer deutlich anderen Farbe, beispielsweise grün, abstrahlt, wenn die Beleuchtungseinrichtung 10 deaktiviert ist. Alternativ könnte auch bei einem Zustand der Beleuchtungseinrichtung 10 die Anzeige 17 der Anzeigeeinrichtung 15 dauerhaft Licht abstrahlen, während die Anzeige 17 bei einem anderen Zustand der Beleuchtungseinrichtung 10 ein Blinklicht bzw. intervallweise Licht abstrahlt.

Das Licht, das die Anzeige 17 der Anzeigeeinrichtung 15 abstrahlt, wird wenigstens im Wesentlichen nach vorne abgestrahlt und zwar an einer Position der Stirnwand 3, die nahe an dem seitlichen Rand 18 und nahe an dem unteren Rand 19 der Stirnwand 3 angeordnet ist, um vom Fahrer im Rückspiegel leicht erkannt werden zu können. Der Abstand X zum seitlichen Rand 18 der Stirnwand 3 beträgt dabei nicht mehr als 40 cm, während der Abstand Y zum unteren Rand 19 der Stirnwand 3 nicht mehr als 50 cm beträgt. Bei dem dargestellten Nutzfahrzeug N handelt es sich um eines, das zum Ziehen von einer links gelenkten Zugmaschine Z vorgesehen ist. Dies ist der Grund, weshalb die Anzeige 17 der Anzeigeeinrichtung 15 auf der linken Seite der Stirnwand 3 vorgesehen ist. Für den Fall, dass das Nutzfahrzeug N zum Ziehen von einer rechts gelenkten Zugmaschine Z vorgesehen ist, wäre die Anzeige 17 der Anzeigeeinrichtung 15 vorzugsweise auf der rechten Seite der Stirnwand 3 vorgesehen. Es könnten auch auf beiden Seiten der Stirnwand 3 Anzeigen 17 der Anzeigeeinrichtung 15 vorgesehen sein, um unabhängig davon zu werden, ob das Nutzfahrzeug N von einer links oder rechts gelenkten Zugmaschine Z gezogen wird.

Des Weiteren sind an der Stirnwand 3 noch zwei Positionsleuchten 20 vorgesehen, und zwar nahe an den gegenüberliegenden seitlichen Rändern 18,21 und dort wiederum nahe an dem unteren Rand 19 der Stirnwand 3. Entsprechende Positionsleuchten 20 dienen dazu, den Umriss des Nutzfahrzeugaufbaus 1 besser zu markieren, weshalb entsprechende Positionsleuchten 20 auch als Markierungsleuchten bezeichnet werden. Die vorliegenden Positionsleuchten 20 strahlen beispielsweise oranges Licht ab. Das Leuchtmittel 16 bzw. die Anzeige 17 der Anzeigeeinrichtung 15 kann zur besseren Erkennbarkeit wenigstens ein Licht einer anderen Farbe abstrahlen.

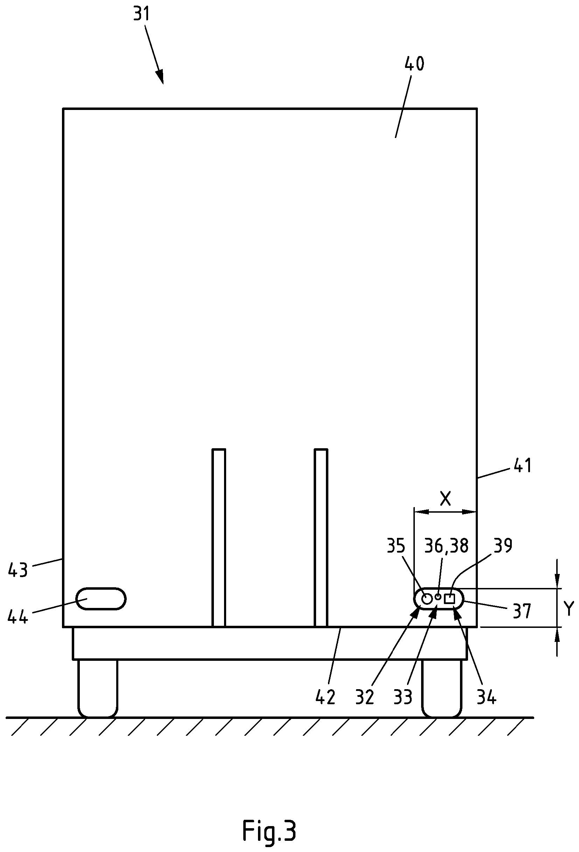

In der Fig. 3 ist ein alternativer Nutzfahrzeugaufbau 31 dargestellt, und zwar in derselben Ansicht wie der Nutzfahrzeugaufbau 1 in der Fig. 2. Die beiden Nutzfahrzeugaufbauten der Fig. 2 und 3 sind zudem in weiten Teilen baugleich ausgebildet, weshalb im Folgenden im Wesentlichen auf die Unterschiede der beiden Nutzfahrzeuge 1,31 eingegangen wird. Dabei sind bei dem Nutzfahrzeugaufbau 31 der Fig. 3 die Schalteinrichtung 32 und die Anzeigeeinrichtung 33 wenigstens im Wesentlichen vollständig in die rechte Positionsleuchte 34 integriert. Die Schalteinrichtung 32 weist dabei einen Sensortaster 35 auf, der bedarfsweise berührungslos betätigt werden kann. Die Anzeigeeinrichtung 33 weist dabei ein LED-Leuchtmittel 36 auf, das platzsparend in ein gemeinsames Gehäuse 37 der Schalteinrichtung 32, der Anzeigeeinrichtung 33 und der Positionsleuchte 34 integriert werden kann. Die Anzeige 38 der Anzeigeeinrichtung 33 und das Leuchtmittel 39 der Positionsleuchte 34 sind an einer Position der Stirnwand 40 vorgesehen, die nahe an dem seitlichen Rand 41 und nahe an dem unteren Rand 42 der Stirnwand 40 angeordnet ist, um vom Fahrer im Rückspiegel leicht erkannt werden zu können. Der Abstand X zum seitlichen Rand 41 der Stirnwand 3 beträgt dabei nicht mehr als 40 cm, während der Abstand Y zum unteren Rand 42 der Stirnwand 3 nicht mehr als 50 cm beträgt. Mit gleichen Abständen X,Z ist an dem anderen seitlichen Rand 43 der Stirnwand 40 eine separate Positionsleuchte 44, die nicht mit einer Anzeigeeinrichtung oder einer Schalteinrichtung in einem gemeinsamen Gehäuse angeordnet ist. Eine weitere entsprechende Integration der Anzeigeeinrichtung und/oder Schalteinrichtung in die Positionsleuchte wäre bei einer anderen Ausführungsform des Nutzfahrzeugaufbaus aber möglich.

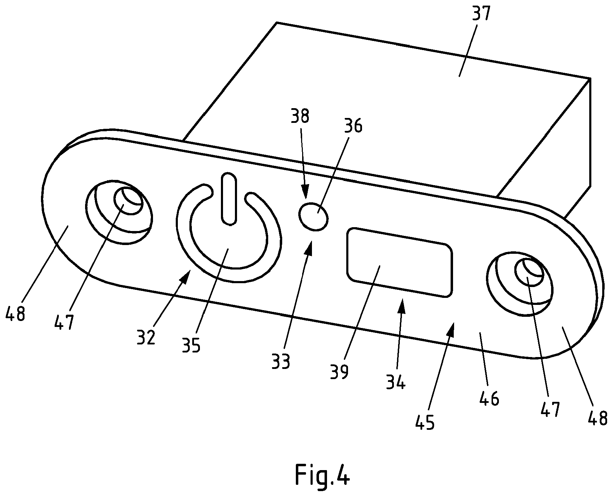

In der Fig. 4 ist das gemeinsame Gehäuse 37 von Anzeigeeinrichtung 33, Schalteinrichtung 32 und Positionsleuchte 34 des Nutzfahrzeugs 31 aus Fig. 3 in einer perspektivischen Ansicht dargestellt. An der Vorderseite 45 des Gehäuses 37 ist ein Bedienpaneel 46 vorgesehen, in das der Taster 35, insbesondere der Sensortaster, der Schalteinrichtung 32 integriert ist. Vorzugsweise ist das Bedienpaneel 46 flächenbündig in die Vorderseite 12 der Stirnwand 40 eingesetzt. Dazu kann das Gehäuse 37 über die beiden äußeren, Öffnungen 47 aufweisende Laschen 48 an der Stirnwand 40 verschraubt werden. Neben dem Taster 35 ist die Anzeige 38 der Anzeigeeinrichtung 33 mit dem zugehörigen Leuchtmittel 36 in Form einer LED vorgesehen. Die LED strahlt in der Richtung nach vorne bezogen auf den Nutzfahrzeugaufbau 31 ein Licht einer bestimmten Farbe ab, wenn die Bearbeitungseinrichtung 10 aktiviert ist und der Laderaum 8 dementsprechend beleuchtet wird. Neben der Anzeige 38 der Anzeigeeinrichtung 33 ist die Positionsleuchte 34 mit dem entsprechenden Leuchtmittel 39 vorgesehen. Die dargestellte Positionsleuchte 34 umfasst dabei als Leuchtmittel mehrere LEDs. Grundsätzlich können aber auch andere Leuchtmittel sowohl der Anzeigeeinrichtung 33 als auch der Positionsleuchte 34 vorgesehen sein. Es ist auch eine andere Anordnung der Leuchtmittel 36,39 und/oder des Tasters 35 denkbar. Die Elektronik zum Betrieb der Anzeigeeinrichtung 33, der Schalteinrichtung 32 und der Positionsleuchte 34 ist zusammen in dem gemeinsamen Gehäuse 37 aus Kunststoff aufgenommen. Die erforderliche Spannungsversorgung und die bedarfsweise erforderlichen Signalleitungen können gemeinsam, etwa von hinten, in das Gehäuse 37 hinein und wieder herausgeführt werden. Bedarfsweise können auch einige Teile der Anzeigeeinrichtung 33, der Schalteinrichtung 32 und der Positionsleuchte 34 außerhalb des Gehäuses 37 vorgesehen sein. Allerdings wird eine möglichst vollständige Integration der Anzeigeeinrichtung 33, der Schalteinrichtung 32 und der Positionsleuchte 34 in das gemeinsame Gehäuse 37 regelmäßig bevorzugt sein.

Anstelle einer separaten Anzeige 38 mit einem entsprechenden Leuchtmittel 36 kann das Leuchtmittel 36 auch in den Taster 35 integriert werden, so dass der Taster 35 oder ein bestimmter Abschnitt des Tasters 35, beispielsweise das Power-Symbol, durch das Leuchtmittel 36 beleuchtet werden kann. Dann wäre letztlich die Anzeige 38 der Anzeigeeinrichtung 33 in die Schalteinrichtung 32 oder wenigstens den Taster 35 integriert.

### Bezugszeichenliste

- 1: Nutzfahrzeugaufbau
- 2: Dach
- 3: Stirnwand
- 4,5: Seitenwand
- 6: Rückwand
- 7: Flügeltür
- 8: Laderaum
- 9: Ladeboden
- 10: Beleuchtungseinrichtung
- 11: Leuchtmittel
- 12: Vorderseite
- 13: Schalter
- 14: Schalteinrichtung
- 15: Anzeigeeinrichtung
- 16: Leuchtmittel
- 17: Anzeige
- 18: seitlicher Rand
- 19: unterer Rand
- 20: Positionsleuchte
- 21: seitlicher Rand
- 31: Nutzfahrzeugaufbau
- 32: Schalteinrichtung
- 33: Anzeigeeinrichtung
- 34: Positionsleuchte
- 35: Taster
- 36: Leuchtmittel
- 37: Gehäuse
- 38: Anzeige
- 39: Leuchtmittel
- 40: Stirnwand
- 41: seitlicher Rand
- 42: unterer Rand
- 43: seitlicher Rand
- 44: Positionsleuchte
- 45: Vorderseite
- 46: Bedienpaneel
- 47: Öffnung
- 48: Lasche
- N: Nutzfahrzeug
- X,Y: Abstand
- Z: Zugfahrzeug

## Patentansprüche

1. Nutzfahrzeugaufbau (1,31), insbesondere Kofferaufbau, mit einer Stirnwand (3,40), mit einem durch die Stirnwand (3,40) nach vorne begrenzten Laderaum (8), mit einer Beleuchtungseinrichtung (10) zum Beleuchten des Laderaums (8), mit einer Schalteinrichtung (14,32) zum Aktivieren und Deaktivieren der Beleuchtungseinrichtung (10),
**dadurch gekennzeichnet, dass** der Nutzfahzeugaufbau (1, 31) eine den aktivierten und den deaktivierten Zustand der Beleuchtungseinrichtung (10) optisch und auf voneinander unterscheidbare Weise anzeigende Anzeigeeinrichtung (15, 33) aufweist, und **dass**
die Anzeigeeinrichtung (15,33) an der Vorderseite (12) der Stirnwand (3,40) bezogen auf den Nutzfahrzeugaufbau (1) angeordnet und höchstens 45 cm, vorzugsweise höchstens 30 cm, insbesondere höchstens 25 cm, von einem seitlichen Rand (18,41) der Stirnwand (3,40) beabstandet ist.

2. Nutzfahrzeugaufbau nach Anspruch 1,
**dadurch gekennzeichnet, dass** die Anzeigeeinrichtung (15,33) wenigstens ein Leuchtmittel (16,36) zum Anzeigen des aktivierten und/oder des deaktivierten Zustands der Beleuchtungseinrichtung (10) aufweist und dass, vorzugsweise, das wenigstens eine Leuchtmittel (16,36) zum Abstrahlen von Licht wenigstens im Wesentlichen nach vorne bezogen auf den Nutzfahrzeugaufbau (1,31) vorgesehen ist.

3. Nutzfahrzeugaufbau nach Anspruch 2,
**dadurch gekennzeichnet, dass** das wenigstens eine Leuchtmittel (16,36) der Anzeigeeinrichtung (15,33) ein LED-Leuchtmittel ist.

4. Nutzfahrzeugaufbau nach einem der Ansprüche 1 bis 3,
**dadurch gekennzeichnet, dass** die Anzeigeeinrichtung (15,33), insbesondere das Leuchtmittel (16,36) der Anzeigeeinrichtung (15,33), in einem Abstand (Y) von höchstens 100 cm, vorzugsweise höchstens 70 cm, insbesondere höchstens 40 cm, vom unteren Rand (19,42) der Stirnwand (3,40) angeordnet ist.

5. Nutzfahrzeugaufbau nach einem der Ansprüche 1 bis 4,
**dadurch gekennzeichnet, dass** die Schalteinrichtung (14,32) bezogen auf den Nutzfahrzeugaufbau (1,31) an der Vorderseite (12) der Stirnwand (3,40) abgeordnet ist und dass, vorzugsweise, die Schalteinrichtung (14,32) in einem Abstand (X) von höchstens 45 cm, vorzugsweise höchstens 30 cm, insbesondere höchstens 25 cm, von einem seitlichen Rand (18,41) der Stirnwand (3,40) und/oder die Schalteinrichtung (14,32) in einem Abstand (Y) von höchstens 100 cm, vorzugsweise höchstens 70 cm, insbesondere höchstens 40 cm, vom unteren Rand (19,42) der Stirnwand (3,40) angeordnet ist.

6. Nutzfahrzeugaufbau nach einem der Ansprüche 1 bis 5,
**dadurch gekennzeichnet, dass** die Schaltvorrichtung (32) und die Anzeigeeinrichtung (33) wenigstens teilweise, insbesondere wenigstens teilweise wenigstens im Wesentlichen vollständig, in einem gemeinsamen Gehäuse (37) verbaut sind und dass, vorzugsweise, das Gehäuse (37) bis auf höchstens das Bedienpaneel (46) und die Durchführungen für elektrische Leitungen geschlossen ausgebildet ist.

7. Nutzfahrzeugaufbau nach Anspruch 6,
**dadurch gekennzeichnet, dass** das Gehäuse (37) wenigstens im Wesentlichen aus Kunststoff gebildet ist.

8. Nutzfahrzeugaufbau nach einem der Ansprüche 1 bis 7,
**dadurch gekennzeichnet, dass** das wenigstens eine Leuchtmittel (36) der Anzeigeeinrichtung (33) ein Leuchtmittel (36) wenigstens eines Schalters oder Tasters (35), insbesondere Sensortasters, der Schaltvorrichtung (32) ist.

9. Nutzfahrzeugaufbau nach einem der Ansprüche 1 bis 8,
**dadurch gekennzeichnet, dass** die Anzeigeeinrichtung (15,33) bei aktivierter Beleuchtungseinrichtung (10) ein Licht einer anderen Farbe als bei deaktivierter Beleuchtungseinrichtung (10) und/oder umgekehrt abstrahlt.

10. Nutzfahrzeugaufbau nach einem der Ansprüche 1 bis 9,
**dadurch gekennzeichnet, dass** die wenigstens eine Positionsleuchte (20,34,44) zur seitlichen Positionsbeleuchtung des Nutzfahrzeugaufbaus (1,31) an der Stirnwand (3,40) vorgesehen ist und dass, vorzugsweise, die Positionsleuchte (34) mit der Schaltvorrichtung (32) und/oder der Anzeigeeinrichtung (33) wenigstens teilweise, insbesondere wenigstens teilweise wenigstens im Wesentlichen vollständig, in einem gemeinsamen Gehäuse (37) angeordnet ist.

11. Nutzfahrzeugaufbau nach Anspruch 10,
**dadurch gekennzeichnet, dass** das Gehäuse (37) bis auf höchstens das Bedienpaneel (46) und die Durchführungen für elektrische Leitungen geschlossen ausgebildet ist.

12. Nutzfahrzeugaufbau nach Anspruch 10 oder 11,
**dadurch gekennzeichnet, dass** die wenigstens eine Positionsleuchte (20,34,44) in einem Abstand (X) von höchstens 40 cm, vorzugsweise höchstens 25 cm, insbesondere höchstens 15 cm, von einem seitlichen Rand (18,21,41,43) der Stirnwand (3,40) angeordnet ist und/oder dass die wenigstens eine Positionsleuchte (20,34,44) höchstens 100 cm, vorzugsweise höchstens 70 cm, insbesondere höchstens 40 cm, von der Unterkante der Stirnwand (3,40) beabstandet angeordnet ist.

13. Nutzfahrzeugaufbau nach einem der Ansprüche 10 bis 12,
**dadurch gekennzeichnet, dass** das wenigstens eine Leuchtmittel (39) der Positionsleuchte (34,44) ein LED-Leuchtmittel ist.

## Claims

1. Commercial vehicle body (1, 31), in particular a box body, with an end wall (3, 40), with a loading space (8) delimited at the front by the end wall (3, 40), with a lighting apparatus (10) for lighting the loading space (8), with a switching apparatus (14, 32) for activating and deactivating the lighting apparatus (10), **characterised in that** the commercial vehicle body (1, 31) has a display apparatus (15, 33) displaying the activated and the deactivated state of the lighting apparatus (10) visually and in a manner distinguishable from one another and **in that** the display apparatus (15, 33) is arranged on the front side (12) of the end wall (3, 40) in relation to the commercial vehicle body (1) and is spaced at most 45 cm, preferably at most 30 cm, in particular at most 25 cm from a lateral edge (18, 41) of the end wall (3, 40).

2. Commercial vehicle body according to claim 1, **characterised in that** the display apparatus (15, 33) has at least one light means (16, 36) for displaying the activated and/or the deactivated state of the lighting apparatus (10) and **in that** preferably the at least one light means (16, 36) is provided for beaming light at least substantially forwards in relation to the commercial vehicle body (1, 31).

3. Commercial vehicle body according to claim 2, **characterised in that** the at least one light means (16, 36) of the display apparatus (15, 33) is an LED light means.

4. Commercial vehicle body according to any one of claims 1 to 3, **characterised in that** the display apparatus (15, 33), in particular the light means (16, 36) of the display apparatus (15, 33), is arranged at a distance (Y) of at most 100 cm, preferably at most 70 cm, in particular at most 40 cm, from the lower edge (19, 42) of the end wall (3, 40).

5. Commercial vehicle body according to any one of claims 1 to 4, **characterised in that** the switching apparatus (14, 32) in relation to the commercial vehicle body (1, 31) is arranged on the front side (12) of the end wall (3, 40) and **in that** preferably the switching apparatus (14, 32) is arranged at a distance (X) of at most 45 cm, preferably at most 30 cm, in particular at most 25 cm, from a lateral edge (18, 41) of the end wall (3, 40) and/or the switching apparatus (14, 32) is arranged at a distance (Y) of at most 100 cm, preferably at most 70 cm, in particular at most 40 cm, from the lower edge (19, 42) of the end wall (3, 40).

6. Commercial vehicle body according to any one of claims 1 to 5, **characterised in that** the switching apparatus (32) and the display apparatus (33) are installed at least partially, in particular at least partially at least substantially fully, in a common housing (37) and **in that** preferably the housing (37) is formed closed except at most for the control panel (46) and the feedthroughs for electric lines.

7. Commercial vehicle body according to claim 6, **characterised in that** the housing (37) is formed at least substantially from plastic.

8. Commercial vehicle body according to any one of claims 1 to 7, **characterised in that** the at least one light means (36) of the display apparatus (33) is a light means (36) of at least one switch or button (35), in particular a sensor button, of the switching apparatus (32).

9. Commercial vehicle body according to any one of claims 1 to 8, **characterised in that** the display apparatus (15, 33), when the lighting apparatus (10) is activated, beams a light of a different colour to that of the deactivated lighting apparatus (10) and/or vice versa.

10. Commercial vehicle body according to any one of claims 1 to 9, **characterised in that** the at least one position light (20, 34, 44) for lateral position lighting of the commercial vehicle body (1, 31) is provided on the end wall (3, 40) and **in that** preferably the position light (34) is arranged with the switching apparatus (32) and/or the display apparatus (33) at least partially, in particular at least partially at least substantially fully, in a common housing (37).

11. Commercial vehicle body according to claim 10, **characterised in that** the housing (37) is formed closed except at most for the control panel (46) and the feedthroughs for electric lines.

12. Commercial vehicle body according to claim 10 or 11, **characterised in that** the at least one position light (20, 34, 44) is arranged at a distance (X) of at most 40 cm, preferably at most 25 cm, in particular at most 15 cm, from a lateral edge (18, 21, 41, 43) of the end wall (3, 40) and/or **in that** the at least one position light (20, 34, 44) is arranged at most 100 cm, preferably at most 70 cm, in particular at most 40 cm, spaced apart from the lower edge of the end wall (3, 40).

13. Commercial vehicle body according to any one of claims 10 to 12, **characterised in that** the at least one light means (39) of the position light (34, 44) is an LED light means.

## Revendications

1. Caisse de véhicule utilitaire (1, 31), notamment une construction de coffre, avec une paroi frontale (3, 40), avec un espace de chargement (8) délimité vers l'avant par la paroi frontale (3, 40), avec un dispositif d'éclairage (10) pour éclairer l'espace de chargement (8), avec un dispositif de commutation (14, 32) permettant d'activer et désactiver le dispositif d'éclairage (10)
**caractérisée en ce que**
la caisse de véhicule utilitaire (1, 31) présente un dispositif d'affichage (15, 33) qui indique, de manière optique, l'état activé et désactivé du dispositif d'éclairage (10) et de manière à pouvoir les distinguer l'un de l'autre,
et **en ce que**
le dispositif d'affichage (15,33) est agencé sur le côté avant (12) de la paroi frontale (3, 40) par rapport à la caisse de véhicule utilitaire (1) et est espacé tout au plus de 45 cm, de préférence tout au plus de 30 cm, notamment tout au plus de 25 cm, d'un bord latéral (18, 41) de la paroi frontale (3, 40).

2. Caisse de véhicule utilitaire selon la revendication 1,
**caractérisée en ce que**
le dispositif d'affichage (15,33) présente au moins un moyen d'éclairage (16, 36) permettant d'afficher l'état activé et/ou désactivé du dispositif d'éclairage (10) et **en ce que**, de préférence, l'on prévoit au moins un moyen d'éclairage (16, 36) pour émettre de la lumière, au moins essentiellement vers l'avant, par rapport à la caisse de véhicule utilitaire (1, 31).

3. Caisse de véhicule utilitaire selon la revendication 2,
**caractérisée en ce que**
au moins un moyen d'éclairage (16, 36) du dispositif d'affichage (15, 33) est un moyen d'éclairage à DEL.

4. Caisse de véhicule utilitaire selon l'une des revendications 1 à 3,
**caractérisée en ce que**
le dispositif d'affichage (15, 33), notamment le moyen d'éclairage (16, 36) du dispositif d'affichage (15, 33), est agencé à une distance (Y) tout au plus de 100 cm, de préférence tout au plus de 70 cm, notamment tout au plus de 40 cm, d'un bord inférieur (19, 42) de la paroi frontale (3, 40).

5. Caisse de véhicule utilitaire selon l'une des revendications 1 à 4,
**caractérisée en ce que**
le dispositif de commutation (14,32) est agencé, par rapport à la caisse de véhicule utilitaire (1, 31), sur le côté avant (12) de la paroi frontale (3, 40) et **en ce que**, de préférence, le dispositif de commutation (14, 32) est agencé à une distance (X) tout au plus de 45 cm, de préférence tout au plus de 30 cm, notamment tout au plus de 25 cm, d'un bord latéral (18, 41) de la paroi frontale (3, 40) et/ou le dispositif de commutation (14, 32) est agencé à une distance (Y) tout au plus de 100 cm, de préférence tout au plus de 70 cm, notamment tout au plus de 40 cm, d'un bord inférieur (19, 42) de la paroi frontale (3, 40).

6. Caisse de véhicule utilitaire selon l'une des revendications 1 à 5,
**caractérisée en ce que**
le dispositif de commutation (32) et le dispositif d'affichage (33) sont montés, au moins partiellement, notamment au moins partiellement, au moins essentiellement intégralement, dans un boîtier commun (37) et **en ce que**, de préférence, le boîtier (37) est conçu fermé à l'exception tout au plus du panneau de commande (46) et des gaines pour les conduites électriques.

7. Caisse de véhicule utilitaire selon la revendication 6,
**caractérisée en ce que**
le boîtier (37) est formé, au moins essentiellement, en matière plastique.

8. Caisse de véhicule utilitaire selon l'une des revendications 1 à 7,
**caractérisée en ce que**
au moins un moyen d'éclairage (36) du dispositif d'affichage (33) est un moyen d'éclairage (36) d'au moins un interrupteur ou un bouton poussoir (35), notamment un poussoir à capteur, du dispositif de commutation (32).

9. Caisse de véhicule utilitaire selon l'une des revendications 1 à 8,
**caractérisée en ce que**
le dispositif d'affichage (15, 33) émet une lumière d'une couleur différente lorsque le dispositif d'éclairage (10) est activé que lorsque le dispositif d'éclairage (10) est désactivé et/ou vice versa.

10. Caisse de véhicule utilitaire selon l'une des revendications 1 à 9,
**caractérisée en ce que**
l'on prévoit au moins un feu de position (20, 34, 44) pour l'éclairage de la position latérale de la caisse de véhicule utilitaire (1, 31) sur la paroi frontale (3, 40) et **en ce que**, de préférence, le feu de position (34) est agencé, avec le dispositif de commutation (32) et/ou le dispositif d'affichage (33), au moins partiellement, notamment au moins partiellement, au moins essentiellement intégralement, dans un boîtier (37) commun.

11. Caisse de véhicule utilitaire selon la revendication 10,
**caractérisée en ce que**
le boîtier (37) est conçu fermé à l'exception tout au plus du panneau de commande (46) et des gaines pour les conduites électriques.

12. Caisse de véhicule utilitaire selon la revendication 10 ou 11,
**caractérisée en ce que**
au moins un feu de position (20, 34, 44) est agencé à une distance (X) tout au plus de 40 cm, de préférence tout au plus de 25 cm, notamment tout au plus de 15 cm, d'un bord latéral (18, 21, 41, 43) de la paroi frontale (3, 40) et/ou **en ce qu'**au moins un feu de position (20, 34, 44) est agencé espacé tout au plus de 100 cm, de préférence tout au plus de 70 cm, notamment tout au plus de 40 cm, de l'arête inférieure de la paroi frontale (3, 40).

13. Caisse de véhicule utilitaire selon l'une des revendications 10 à 12,
**caractérisée en ce que**
au moins un moyen d'éclairage (39) du feu de position (34, 44) est un moyen d'éclairage à DEL.
